# EUROPÄISCHE PATENTSCHRIFT

(11) **EP 2 313 533 B1**
(45) Veröffentlichungstag und Bekanntmachung des Hinweises auf die Patenterteilung: **04.07.2012**
(21) Anmeldenummer: 09775949.2
(22) Anmeldetag: 13.07.2009
(51) Int. Cl.: F27B 5/10, C21D 9/00, C21D 1/74, F27B 5/12, F27D 5/00

(54) **RETORTENOFEN MIT ENTKOPPELTER CHARGENAUFNAHME, ZUR WÄRMEBEHANDLUNG VON METALLISCHEN WERKSTÜCKEN**
RETORT FURNACE WITH DECOUPLED CHARGE SUPPORT, FOR HEAT TREATING METAL WORKPIECES
FOUR À CORNUE COMPRENANT UN SUPPORT DE CHARGE DÉCOUPLÉ, POUR TRAITER THERMIQUEMENT DES PIÈCES À USINER MÉTALLIQUES

(30) Priorität: 24.07.2008 DE 202008009980 U; 08.08.2008 DE 202008010550 U; 22.08.2008 DE 202008011194 U
(43) Veröffentlichungstag der Anmeldung: 27.04.2011
(60) Teilanmeldung: 10016239.5
(73) Patentinhaber: Ipsen International GmbH, 47533 Kleve (DE)
(72) Erfinder: SARRES, Rolf, 46147 Oberhausen (DE); SCHWALL, Heinz, 52249 Eschweiler (DE)
(74) Vertreter: Dennemeyer & Associates S.A.
(86) Internationale Anmeldenummer: PCT/DE2009/000963
(87) Internationale Veröffentlichungsnummer: WO 2010/009701

(56) Entgegenhaltungen:
- WO-A1-2005/073413
- DE-A1- 2 126 474
- DE-B3- 10 312 650
- US-A- 3 565 410
- US-A- 4 195 820
- US-A- 4 854 863
- US-A1- 2004 007 565
- US-A1- 2004 009 448

## Beschreibung

### Technisches Gebiet

Die Erfindung betrifft einen Retortenofen zur Wärmebehandlung, wie z. B. zum Blankanlassen, Glühen unter Stickstoff oder Stickstoff/Wasserstoff, Nitrieren oder Nitrokarburieren von metallischen Werkstücken.

### Stand der Technik

Retortenöfen zur Wärmebehandlung von metallischen Werkstücken sind nach dem Stand der Technik in vielfältigen Anordnungen, wie z. B. gemäß DE-AS 2 010 433, DE- OS 27 54 034, DE 30 28 952 C2, DE 31 43 532 A1, DE 36 31 389 C2 und DE 103 38 431 A1 bekannt.

Die Erfindung bevorzugt zwar horizontale Retortenöfen, die im Wesentlichen eine liegende rohrförmige Retorte, ein die Retorte wärmeisolierend umgebendes Ofengehäuse und eine Einrichtung zur Beheizung der Retorte aufweisen, jedoch ist sie auch auf andere Bauarten von Retortenöfen übertragbar.

Üblicherweise besitzt die Retorte
- einen die Schutz- und Reaktionsgase aufnehmenden, gasdicht verschließbaren Behandlungs- oder Chargenraum zur Wärmebehandlung der Werkstücke wie Chargen und
- zur zweckmäßigen Positionierung und Aufnahme/Auflage der Chargen entsprechende Gestelle.

Bei der Wärmebehandlung wird die Erwärmung bei Temperaturen bis 650° C durch die Konvektion wesentlich ünterstützt. Innerhalb der Retorte wird eine intensive und die Werkstücke allseitig erfassende Umwälzung der Ofenatmosphäre angestrebt. Dazu werden im Bereich der Retorte angeordnete Umwälzaggregate und Gasführungshilfen eingesetzt.

Insbesondere sind bei der Wärmebehandlung die Retorten einer hohen Beanspruchung ausgesetzt. Diese werden wegen der Formstabilität mit Wandstärken über 8 mm ausgeführt.

Zumindest bei den Retortenöfen der oben beschriebenen Art hingegen ergeben sich durch die Chargengewichte und den Stützelementen der Aufnahmegestelle punktuelle Belastungen im unteren Teil der in diesem Fall horizontal liegenden Retorten. Nachteilig ist, dass die Belastungen mit zunehmendem Chargengewicht steigen, wohingegen die Belastbarkeit des Retortenmaterials mit zunehmender Ofentemperatur abnimmt. Deshalb sind die Beladekapazität und der Wirkungsgrad der Wärmebehandlung der Werkstückchargen derartiger Retortenöfen begrenzt.

Die Fachwelt hat sich schon mit der Vermeidung schädlicher Beanspruchungen von Retorten bei der Wärmebehandlung von metallischen Werkstücken befasst. Derartige Lösungen betrafen aber lediglich die Entlastung des Retortenbodens bei vertikal angeordneten Retorten durch Auflager und/oder durch Tragmittel zur Abstützung gegenüber einem Gehäuse, so z. B. beschrieben in DE 2 054 666 A.

Dabei wurde zwar die Beanspruchung der Retorten durch die Chargengewichte selbst sowie deren Aufnahmegestelle berücksichtigt, jedoch blieb eine Erhöhung des Wirkungsgrads der Wärmebehandlung aus.

Des Weiteren wurde eine Kompensatortechnik (IHU) aus dem ausschließlichen Vertikalofenbau bekannt, bei der die gesamte Chargenlast auf einem hitzbeständigen Sockel aus Beton liegt und über diesen abgestützt wird. Die Retorte, deren Anschlag über einen Kompensator ausgeglichen wird, kann zwar so schon mit einer dünneren Wandstärke ausgeführt werden, und deren Lebensdauer verlängert sich auf Grund der geringeren Belastung.

Neben unübersehbaren Vorteilen ergeben sich jedoch auch aus dieser Lösung Nachteile, wie:
- Die Lösung ist auf horizontale Anordnungen nicht übertragbar.
- Der Sockel sowie weitere keramische Isoliermaterialien und Stützen können für nachfolgende Prozesse schädliche Feuchtigkeit binden.
- Der Kompensator ist baubedingt relativ groß und kostenaufwendig; er bildet Wärmebrücken und bewirkt Energieverluste.
- Die Anordnung im Boden begünstigt den Übergang zu niedrigen Temperaturen und die Bildung von Kondensat, was schwieriger als Wasserdampf aus der Retorte zu entfernen ist.

Gemäß der DE 103 12 650 B3 wurde darüber hinaus ein Wärmebehandlungsofen, insbesondere ein Drucksinterofen mit einem Ofengehäuse und einem vom Ofengehäuse gehaltenen und mit Abstand umschließenden, einen Kesselraum bildenden Isolationskäfig und einer im Inneren des Isolationskäfigs angeordneten, die Werkstückcharge umhüllenden mit dem Isolationskäfig einen Isolationsraum begrenzenden Muffel bekannt. Dieser umfaßt auch so genannte Stützen als quasi ein Aufnahmegestell für die Charge. Eine Übertragung dieser Lösung auf gattungsgemäße Retortenöfen der eingangs beschriebenen Art würde nicht dazu führen, den Wirkungsgrad der Wärmebehandlung der Werkstückchargen und die Beladekapazität der Retorte zu erhöhen.

### Darstellung der Erfindung

Aufgabe der Erfindung ist es, bei Retortenöfen, die im Wesentlichen eine metallische rohrförmige Retorte, ein die Retorte umgebendes Ofengehäuse und eine Einrichtung zur Beheizung der Retorte aufweisen,
- den Wirkungsgrad der Wärmebehandlung der Werkstückchargen und die Beladekapazität der Retorte zu erhöhen,
- die Wandstärke der Retorte zu reduzieren, so dass sich deren Masse vermindert,
- die Retorte auf die Funktion des gasdicht verschließbaren Behandlungs- oder Chargenraums zu konzentrieren,
- einen raschen Atmosphärenwechsel zu realisieren, Verunreinigungen der Schutzgasatmosphäre zu vermeiden sowie schädliche Auswirkungen auf den Wärmebehandlungsprozeß zu vermeiden.

Diese Aufgabenstellung löst die Erfindung prinzipiell dadurch, dass das Gewicht der Charge und des Aufnahmegestells von der Retorte entkoppelt wird und das Aufnahmegestell mit Mitteln zur Abstützung am Ofengehäuse verbunden ist sowie diese Mittel gasdicht in Durchführungen der Wandungen der Retorte und das umgebende Ofengehäuse geführt sind.

Im Unterschied zum Stand der Technik ist damit die Retorte vom Gewicht der Charge und des Aufnahmegestells nicht nur entlastet, sondern es wird zu dem die Aufgabenstellung gelöst, den Wirkungsgrad der Wärmebehandlung der Werkstückchargen zu erhöhen, die Masse und die Wandstärke der Retorte zu reduzieren, die Retorte auf die Funktion des gasdicht verschließbaren Behandlungs - oder Chargenraums zu orientieren und insgesamt eine erhöhte Beladekapazität der Retorte zu erreichen.

In erfindungsgemäßer Ausbildung wird das Aufnahmegestell hängend mit Mitteln zur Abstützung am Ofengehäuse verbunden.

Dazu weist das Ofengehäuse Traversen für eine Anbringung der Mittel auf, und die Mittel sind sowohl mit dem Aufnahmegestell als auch über die Traversen mit dem Ofengehäuse über Gelenke verbunden.

Die Durchführungen in den Wandungen umfassen eingelassene Rohre mit gasdichten Kompensatoren, die eine Längenausdehnung ausgleichen und eine Bewegungsfreiheit der Mittel in den Rohren bei wärmebedingten Ausdehnungen insbesondere der Retorte gewährleisten.

Des Weiteren sind den Rohren mit den gasdichten Kompensatoren entsprechende Dichtungen und darüber hinaus mit einem Kühlmedium wie Wasser gefüllte Kühltaschen und Isolierungen zum Schutz der Kompensatoren vor hoher Wärme zugeordnet.

Eine erfindungsgemäß komplettierte Ausführung sieht vor, dass die in den Wandungen eingelassenen Rohre mittels lösbarer Flanschverbindungen in je ein erstes oder unteres Teil und zweites oder oberes Teil getrennt sind, wobei das untere Teil in mindestens eine der Wandungen eingelassen und das obere Teil in der Traverse eingelassen ist. Dabei besitzt das obere Teil eine die Funktion des Kompensators übernehmende Faltenbalghülse, und das untere Teil ist von der Kühltasche umfasst.

Mindestens eine die Rohre mit Kompensatoren bildende Baueinheit, wie z.B. das obere Teil mit der die Funktion des Kompensators übernehmenden Faltenbalghülse oder das von der Kühltasche umfasste untere Teil, ist austauschbar angeordnet.

Schließlich wird die Erfindung dadurch vollendet, daß die Retorte mit den Mitteln zur Abstützung am Ofengehäuse ohne deren Demontage dadurch herausnehmbar ist, daß die Wandung des Ofengehäuses ein lösbar angeordnetes Segment aufweist, welches einen Bereich der Durchführungen umfaßt.

Hierzu können durch den Fachmann verschiedene konstruktive Lösungen ausgeführt werden, die sichern, daß mindestens eins der den Erfindungsgegenstand betreffenden Merkmale, wie
- das Aufnahmegestell bleibt mit Mitteln zur Abstützung am Ofengehäuse verbunden,
- die Mittel bleiben gasdicht in Durchführungen einer Wandung des Ofengehäuses und einer Wandung der Retorte geführt,
- das Aufnahmegestell bleibt hängend mit den Mitteln zur Abstützung am Ofengehäuse verbunden,
- die Mittel sind über Traversen am Ofengehäuse abgestützt sind und/oder
- die Mittel sind sowohl zu dem Aufnahmegestell als auch zu den Traversen (9) über Gelenke am Ofengehäuse abgestützt,
erfüllt ist.

Allein durch diese konstruktiven und erfinderischen Maßnahmen wird die Funktion der Retorte auf den gasdichten Abschluss des Behandlungsraums reduziert, und die Dicke der Wandung der Retorte kann somit von beispielsweise 10 mm auf 5 mm vermindert werden.

Zudem bewirkt die Reduzierung der Wandung der Retorte eine raschere Wärmeleitung durch die Wandung, womit sich die Wärmeübertragungsgeschwindigkeit erhöht.

Durch die direkte Übertragung der Wärme zwischen der verringerten Wandung der Retorte zur Charge erschließt sich auch die Möglichkeit, auf Gasführungsleiteinrichtungen wie Gasführungszylinder zu verzichten, die als in diesem Fall nachteilige Strahlungsschirme wirken würden. Dies bewirkt wiederum, dass sich kühleres Ofengas im Kontakt mit der Retorte schneller erwärmt.

### Kurze Beschreibung der Zeichnungen

In den zugehörigen Zeichnungen zeigen
- Fig. 1: einen Längsschnitt durch einen erfindungsgemäßen horizontal liegenden Retortenofen,
- Fig. 2: den Querschnitt A-A nach Fig. 1 und
- Fig. 3: eine herausgeschnittene Einzelheit aus Fig. 1 und Fig. 2.

### Bester Weg zur Ausführung der Erfindung

Die Erfindung wird an einem konstruktiv ausgeführten Beispiel näher beschrieben.

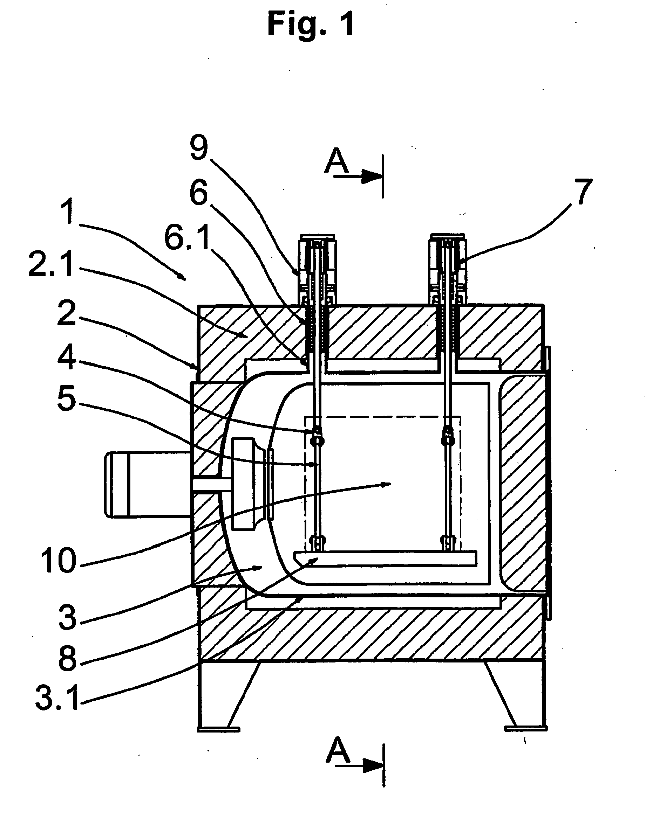

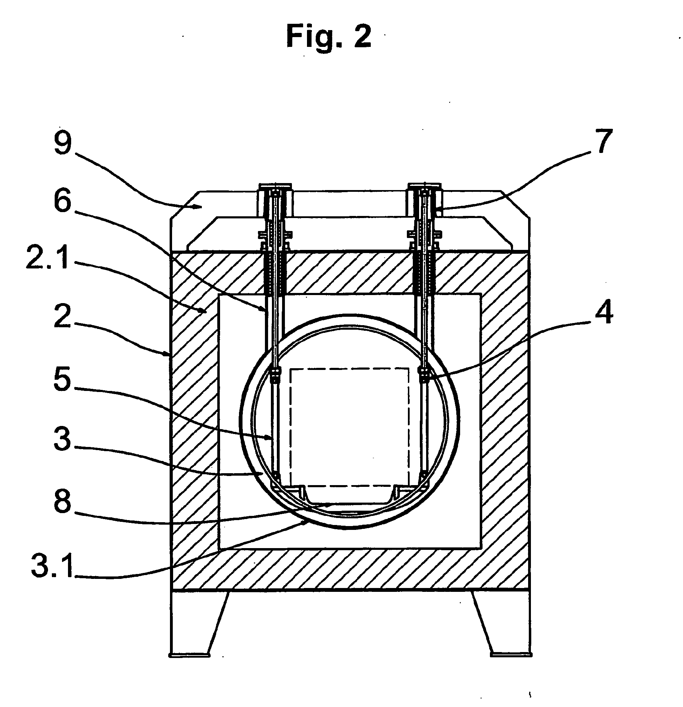

Entsprechend Fig. 1 und 2 umfasst ein Retortenofen 1 zur Wärmebehandlung von nicht dargestellten metallischen Werkstücken eine metallische horizontal liegende rohrförmige Retorte 3, ein die Retorte 3 umgebendes Ofengehäuse 2. Die Retorte 3 weist einen die Schutz- und Reaktionsgase aufnehmenden, gasdicht verschließbaren Behandlungs- oder Chargenraum 10 zur Wärmebehandlung der Werkstücke wie Charge und zu deren Positionierung als Chargenaufnahme ein Aufnahmegestell 8 auf.

Vom Ofengehäuse 2 werden hier nicht dargestellte Heizelemente aufgenommen, die die Retorte 3 mit dem Behandlungs- oder Chargenraum 10 zur Wärmebehandlung der Werkstücke wie Charge in einer Schutzgasatmosphäre erwärmt. Außerdem sind dem Retortenofen 1 eine nicht bezeichnete Ventilatoreinheit und in der Retorte 3 eine nicht bezeichnete Leiteinrichtung für die Führung der Schutzgasatmosphäre zugeordnet.

Die Retorte 3 ist - auch hier nicht bezeichnet - zu einem Ende verschlossen und zum anderen Ende mit einer durch einen Deckel gasdicht verschließbaren Beschickungsöffnung für die Charge versehen.

Die Ausbildung dieser nur der Vollständigkeit halber dargestellten, aber nicht bezeichneten Teile sind für die erfindungsgemäße Funktion hier ohne Bedeutung.

Gegenüber dem eingangs behandelten Stand der Technik hebt sich nun die Erfindung durch die Kombination folgender Merkmale in Bezug auf das Aufnahmegestell 8 mit dem folgenden neuen Konstruktionsprinzip hervor:
a) Das Gewicht der Charge und des Aufnahmegestells 8 ist von der Retorte 3 entkoppelt,
b) wozu das Aufnahmegestell 8 mit Mitteln 5 zur Abstützung am Ofengehäuse 2 verbunden ist, und
c) die Mittel 5 sind gasdicht in Durchführungen 6 einer Wandung 2.1 des Ofengehäuses 2 und einer Wandung 3.1 der Retorte 3 geführt.

Dieses veränderte Prinzip schafft die Voraussetzung, um
- die Wandstärke der Retorte zu reduzieren, so dass sich deren Masse vermindert, und
- den Wirkungsgrad der Wärmebehandlung der Werkstückchargen und die Beladekapazität der Retorte zu erhöhen.

Aus Fig. 1 und Fig. 2 ist ersichtlich, dass zur Entkopplung des Gewichts der Charge und des Aufnahmegestells 8 von der Retorte 3 das Aufnahmegestell 8 hängend mit Mitteln 5 zur Abstützung am Ofengehäuse 2 verbunden ist, die Mittel 5 über Traversen 9 und sowohl zu dem Aufnahmegestell 8 als auch zu den Traversen 9 über Gelenke 4 am Ofengehäuse 2 abgestützt sind.

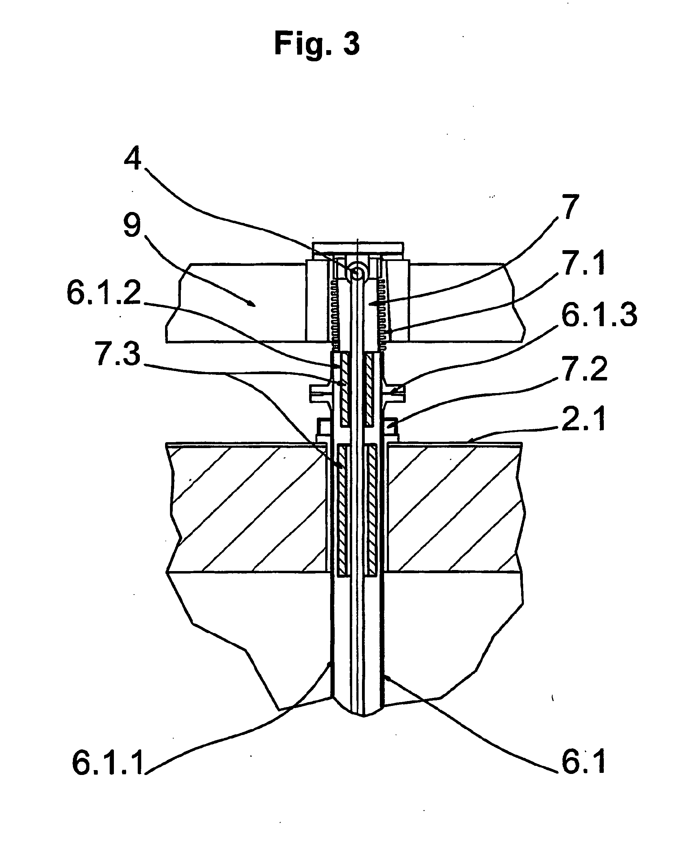

Des Weiteren zeigen die Fig. 1 und die Fig. 2, dass die Durchführungen 6 in den Wandungen 2.1, 3.1 eingelassene Rohre 6.1 mit ausgleichenden, gasdichten Kompensatoren 7 aufweisen. Gemäß Fig. 3 sind die Rohre 6.1 von Kühltaschen 7.2 umfasst

Über die Kompensatoren 7 und Isolierungen 7.3 sowie nicht dargestellte Dichtungen werden die Rohre 6.1 mit den Traversen 9 zu gasdichten Einheiten verbunden. Die Kompensatoren 7 ermöglichen die Ausgleichung von Bewegungen, die die Rohre 6.1 bei der wärmebedingten Ausdehnung der Retorte 3 erfahren. Die z.B. mit Wasser gefüllten Kühltaschen 7.2 sowie die Isolierungen 7.3 verhindern eine unzulässige Erwärmung der Kompensatoren 7.

Die Erfüllung der Aufgabenstellung der Erfindung vervollkommnet sich, in dem die Funktion der Retorte 3 nunmehr auf den gasdichten Abschluß des Chargenraums 10 reduziert wird und ein rascher Atmosphärenwechsel realisierbar wird sowie Verunreinigungen der Schutzgasatmosphäre und schädliche Auswirkungen auf den Wärmebehandlungsprozeß vermieden werden.

Die erfindungsgemäß erzielte Reduzierung der Wandung 3.1 der Retorte 3 bewirkt eine raschere Wärmeleitung, wodurch der Wirkungsgrad der Wärmebehandlung erhöht wird.

Des Weiteren bewirkt die Reduzierung der Wandstärke eine Verringerung des Retortengewichts. Dadurch wird beim Aufheizen des Ofens auf die Wärmebehandlungstemperatur Energie eingespart.

Es hat sich insgesamt gezeigt, daß mit diesem erfindungsgemäßen Konstruktionsprinzip Chargengewichte bis zu 5 t bestimmungsgemäß wärmebehandelt werden können.

Einzelheiten einer besonders zweckmäßigen konstruktiven Ausgestaltung der Erfindung zeigt die Fig. 3. Hier sind die in den Wandungen 2.1, 3.1 eingelassenen Rohre 6.1 außerhalb, hier oberhalb des Ofengehäuses 2 mittels lösbarer Flanschverbindungen 6.1.3 in je ein unteres Teil 6.1.1 und oberes Teil 6.1.2 getrennt. Das untere Teil 6.1.1 ist in mindestens eine der Wandungen 2.1, 3.1 eingelassen, und das obere Teil 6.1.2 ist in der Traverse 9 eingelassen. Dabei ist das obere Teil 6.1.2 mit einer die Funktion des Kompensators 7 übernehmenden Faltenbalghülse 7.1 ausgestattet. Das untere Teil 6.1.1 ist von der Kühltasche 7.2 umfasst.

Mindestens eine die Rohre 6.1 mit Kompensatoren 7 bildende Baueinheit ist z.B. als Verschleiß-/Ersatzteil austauschbar angeordnet, was besonders der Fig. 3 zu entnehmen ist.

Die Lösung der Aufgabenstellung der Erfindung wird noch dadurch wirkungsvoll unterstützt, daß die Retorte 3 mit den abstützenden Mitteln aus dem Ofengehäuse 2 ohne deren Demontage herausnehmbar ist.

Dazu weist die Wandung 2.1 des Ofengehäuses 2 ein - einen Bereich der Durchführungen 6 umfassendes - lösbar angeordnetes nicht näher dargestelltes Segment auf, welches hier wegen der konstruktiv vielfältigen Möglichkeiten entsprechend den eingangs genannten Bedingungen nicht im Einzelnen ausgeführt ist.

Jedoch ist in der Fig. 2 diese wartungsfreundliche Herausnehmbarkeit konstruktiv durch eine Teilbarkeit des Ofengehäuses 2 angedeutet.

Insgesamt zeigt das Ausführungsbeispiel, daß zur Entkopplung des Gewichts der Charge und des Aufnahmegestells 8 von der Retorte 3 das Aufnahmegestell 8 hängend mit Mitteln 5 zur Abstützung am Ofengehäuse 2 verbunden ist, die Mittel 5 über Traversen 9 und sowohl zu dem Aufnahmegestell 8 als auch zu den Traversen 9 über Gelenke 4 am Ofengehäuse 2 oben abgestützt sind.

Die Erfindung beschränkt sich nicht allein auf diese Art der konstruktiven Anordnung. Demnach kann zur Entkopplung des Gewichts der Charge und des Aufnahmegestells 8 von der Retorte 3 das Aufnahmegestell 8 auch z.B. stehend mit Mitteln 5 zur Abstützung am Ofengehäuse 2 verbunden und die Mittel 5 über Traversen 9 am Ofengehäuse 2 unten abgestützt sein.

Im Rahmen des Erfindungsgedankens, wie
a) das Gewicht der Charge und des Aufnahmegestells 8 ist von der Retorte 3 entkoppelt,
b) wozu das Aufnahmegestell 8 mit Mitteln 5 zur Abstützung am Ofengehäuse 2 verbunden ist, und
c) die Mittel 5 sind gasdicht in Durchführungen 6 einer Wandung 2.1 des Ofengehäuses 2 und einer Wandung 3.1 der Retorte 3 geführt,
sind weitere Konstruktionsausführungen möglich.

### Gewerbliche Anwendbarkeit

Die durch das erfindungsgemäß veränderte Konstruktionsprinzip der Aufhängung des Aufnahmegestells 8 erzielten Wirkungen schaffen eine wesentliche Gebrauchswerterhöhung und eine erhöhte Verfügbarkeit von Retortenöfen bei der anwendenden Industrie.

### Bezugszeichenliste

- 1: Retortenofen
- 2: Ofengehäuse
- 2.1: Wandung des Ofengehäuses

- 3: metallische rohrförmige Retorte
- 3.1: Wandung der Retorte

- 4: Gelenk

- 5: Mittel zur Abstützung

- 6: Durchführung
- 6.1: Rohr
- 6.1.1: erstes oder unteres Teil
- 6.1.2: zweites oder oberes Teil
- 6.1.3: Flanschverbindung

- 7: Kompensator
- 7.1: Faltenbalghülse
- 7.2: Kühltasche
- 7.3: Isolierung

- 8: Aufnahmegestell

- 9: Traverse

- 10: Behandlungs- oder Chargenraum

## Patentansprüche

1. Retortenofen (1) zur Wärmebehandlung von metallischen Werkstücken, aufweisend eine metallische rohrförmige, insbesondere horizontal liegende Retorte (3) und ein die Retorte (3) umgebendes Ofengehäuse (2), wobei die Retorte (3) einen die Schutz- und Reaktionsgase aufnehmenden, gasdicht verschließbaren Behandlungs- oder Chargenraum (10) zur Wärmebehandlung der Werkstücke wie Charge und zu deren Positionierung als Chargenaufnahme ein Aufnahmegestell (8) umfasst, **dadurch gekennzeichnet, dass**
a) das Gewicht der Charge und des Aufnahmegestells (8) von der Retorte (3) entkoppelt ist,
b) das Aufnahmegestell (8) mit Mitteln (5) zur Abstützung am Ofengehäuse (2) verbunden ist und
c) die Mittel (5) gasdicht in Durchführungen (6) einer Wandung (2.1) des Ofengehäuses (2) und einer Wandung (3.1) der Retorte (3) geführt sind.

2. Retortenofen nach Anspruch 1, **dadurch gekennzeichnet, dass** das Aufnahmegestell (8) hängend mit Mitteln (5) zur Abstützung am Ofengehäuse (2) verbunden ist.

3. Retortenofen nach Anspruch 1 oder 2, **dadurch gekennzeichnet, dass** die Mittel (5) über Traversen (9) am Ofengehäuse (2) abgestützt sind.

4. Retortenofen nach einem der Ansprüche 1 bis 4, **dadurch gekennzeichnet, dass** die Mittel (5) sowohl zu dem Aufnahmegestell (8) als auch zu den Traversen (9) über Gelenke (4) am Ofengehäuse (2) abgestützt sind.

5. Retortenofen nach einem der Ansprüche 1 bis 4, **dadurch gekennzeichnet, dass** die Durchführungen (6) in den Wandungen (2.1, 3.1) eingelassene Rohre (6.1) mit längenausgleichenden Kompensatoren (7) aufweisen.

6. Retortenofen nach einem der Ansprüche 1 bis 5, **dadurch gekennzeichnet, dass** den Rohren (6.1) mindestens eine Kühltasche (7.2) zugeordnet ist.

7. Retortenofen nach einem der Ansprüche 1 bis 6, **dadurch gekennzeichnet, dass** die Rohre (6.1) Isolierungen (7.3) aufweisen.

8. Retortenofen nach einem der Ansprüche 1 bis 7, **dadurch gekennzeichnet, dass** die in den Wandungen (2.1, 3.1) eingelassenen Rohre (6.1) außerhalb des Ofengehäuses (2) mittels lösbarer Flanschverbindungen (6.1.3) in je ein erstes oder unteres Teil (6.1.1) und zweites oder oberes Teil (6.1.2) getrennt sind, wobei das erste oder untere Teil (6.1.1) in mindestens eine der Wandungen (2.1, 3.1) eingelassen und das zweite oder obere Teil (6:1.2) in den Traversen (9) eingelassen ist.

9. Retortenofen nach einem der Ansprüche 1 bis 8, **dadurch gekennzeichnet, dass** das zweite oder obere Teil (6.1.2) eine die Funktion des Kompensators (7) übernehmende Faltenbalghülse (7.1) ist.

10. Retortenofen nach einem der Ansprüche 1 bis 9, **dadurch gekennzeichnet, dass** die Kühltasche (7.2) dem ersten oder unteren Teil (6.1.1) zugeordnet ist.

11. Retortenofen nach einem der Ansprüche 1 bis 10, **dadurch gekennzeichnet, dass** mindestens eine die Rohre (6.1) mit Kompensatoren (7) bildende Baueinheit austauschbar angeordnet ist.

12. Retortenofen nach einem der Ansprüche 1 bis 11, **dadurch gekennzeichnet, dass** die Retorte (3) mit den Mitteln (5) aus dem Ofengehäuse (2) ohne deren Demontage herausnehmbar ist, wobei dazu die Wandung (2.1) des Ofengehäuses (2) ein - mindestens einen Bereich der Durchführungen (6) umfassendes - lösbar angeordnetes Segment aufweist.

## Claims

1. A retort oven (1) for heat treatment of metallic workpieces, comprising a metallic tubular, in particular horizontally situated retort (3), and an oven casing (2) surrounding the retort (3), said retort (3) comprising a treatment or batch chamber (10), which receives protective and reaction gases and can be closed in a gas-tight manner, for heat treatment of the workpieces as a batch, and a holding frame (8) as a batch holder for positioning said workpieces, **characterized in that**
a) the weight of the batch and the receiving frame (8) is disconnected from the retort (3),
b) the receiving frame (8) is connected with supporting means (5) on the oven casing (2), and
c) the means (5) are guided in a gas-tight manner in passageways (6) of a wall (2.1) of the oven casing (2) and a wall (3.1) of the retort (3).

2. The retort oven according to claim 1, **characterized in that** the receiving frame (8) is connected in suspension with supporting means (5) on the oven casing (2).

3. The retort oven according to claim 1 or 2, **characterized in that** the means (5) are supported on the oven casing (2) via crossbars (9).

4. The retort oven according to any of claims 1 to 4, **characterized in that** the means (5) are supported on the oven casing (2) via joints (4), both with respect to the holding frame (8) and the crossbars (9).

5. The retort oven according to any of claims 1 to 4, **characterized in that** the passageways (6) have pipes (6.1) with length compensating compensators (7) embedded into the walls (2.1, 3.1).

6. The retort oven according to any of claims 1 to 5, **characterized in that** at least one cooler (7.2) is attributed to the pipes (6.1).

7. The retort oven according to any of claims 1 to 6, **characterized in that** the pipes (6.1) have insulations (7.3).

8. The retort oven according to any of claims 1 to 7, **characterized in that** the pipes (6.1) embedded into the walls (2.1, 3.1) are separated outside the oven casing (2) by means of removable flange connections (6.1.3) into respectively a first or lower part (6.1.1) and a second or upper part (6.1.2), wherein the first or lower part (6.1.1) is embedded into at least one of the walls (2.1, 3.1), and the second or upper part (6.1.2) is embedded into the crossbars (9).

9. The retort oven according to any of claims 1 to 8, **characterized in that** the second or upper part (6.1.2) is a bellows sleeve (7.1) acting as the compensator (7).

10. The retort oven according to any of claims 1 to 9, **characterized in that** the cooler (7.2) is attributed to the first or lower part (6.1.1).

11. The retort oven according to any of claims 1 to 10, **characterized in that** at least one modular unit forming the pipes (6.1) with compensators (7) is arranged so as to be interchangeable.

12. The retort oven according to any of claims 1 to 11, **characterized in that** the retort (3) together with the means (5) can be removed from the oven casing (2) without dismantling thereof, wherein for this purpose, the wall (2.1) of the oven casing (2) has a removably arranged segment including at least one section of the passageways (6).

## Revendications

1. Fourneau à cornues (1) pour le traitement thermique de pièces à travailler métalliques, comprenant une cornue (3) métallique tubulaire, en particulier située horizontalement, et une enveloppe de four (2) entourant la cornue (3), ladite cornue (3) comprenant une chambre de traitement ou de charge (10), qui reçoit les gaz inertes et réactifs et peut être fermée de façon étanche au gaz, pour le traitement thermique des pièces à travailler sous forme de charge, et un cadre de réception (8) comme support de charge pour positionner lesdites pièces, **caractérisé en ce que**
a) le poids de la charge et du cadre de réception (8) est découplé de la cornue (3),
b) le cadre de réception (8) est relié à des moyens (5) prenant appui sur l'enveloppe de four (2), et
c) les moyens (5) sont amenés de manière étanche au gaz dans des passages (6) d'une paroi (2.1) de l'enveloppe de four (2) et une paroi (3.1) de la cornue (3).

2. Fourneau à cornues selon la revendication 1, **caractérisé en ce que** le cadre de réception (8) est relié en suspension aux moyens (5) prenant appui sur l'enveloppe de four (2).

3. Fourneau à cornues selon la revendication 1 ou 2, **caractérisé en ce que** les moyens (5) prennent appui sur l'enveloppe de four (2) par l'intermédiaire de traverses (9).

4. Fourneau à cornues selon l'une quelconque des revendications 1 à 4, **caractérisé en ce que** les moyens (5) prennent appui sur l'enveloppe de four (2) par l'intermédiaire de charnières (4), aussi bien par rapport au cadre de réception (8) qu'aux traverses (9).

5. Fourneau à cornues selon l'une quelconque des revendications 1 à 4, **caractérisé en ce que** les passages (6) présentent des tuyaux (6.1) encastrés dans les parois (2.1, 3.1) avec des dispositifs de compensation de longueur (7).

6. Fourneau à cornues selon l'une quelconque des revendications 1 à 5, **caractérisé en ce qu'**au moins un caisson de refroidissement (7.2) est associé aux tuyaux (6.1).

7. Fourneau à cornues selon l'une quelconque des revendications 1 à 6, **caractérisé en ce que** les tuyaux (6.1) présentent des isolations (7.3).

8. Fourneau à cornues selon l'une quelconque des revendications 1 à 7, **caractérisé en ce que** les tuyaux (6.1) encastrés dans les parois (2.1, 3.1) sont en dehors de l'enveloppe de four (2) divisés au moyen de raccordements par bride amovibles (6.1.3) respectivement en une première partie (6.1.1) ou partie inférieure et une deuxième partie (6.1.2) ou partie supérieure, la première partie (6.1.1) ou partie inférieure étant encastrée dans au moins l'une des parois (2.1, 3.1), et la deuxième partie (6.1.2) ou partie supérieure étant encastrée dans les traverses (9).

9. Fourneau à cornues selon l'une quelconque des revendications 1 à 8, **caractérisé en ce que** la deuxième partie (6.1.2) ou partie supérieure est un manchon à soufflet (7.1) servant de dispositif de compensation (7).

10. Fourneau à cornues selon l'une quelconque des revendications 1 à 9, **caractérisé en ce que** le caisson de refroidissement (7.2) est associé à la première partie (6.1.1) ou partie inférieure.

11. Fourneau à cornues selon l'une quelconque des revendications 1 à 10, **caractérisé en ce qu'**au moins une unité modulaire constituant les tuyaux (6.1) avec des dispositifs de compensation (7) est agencée de manière interchangeable.

12. Fourneau à cornues selon l'une quelconque des revendications 1 à 11, **caractérisé en ce que** la cornue (3) avec les moyens (5) peut être retirée de l'enveloppe de four (2) sans le démontage de cette dernière, dans lequel à cet effet la paroi (2.1) de l'enveloppe de four (2) présente un segment disposé de manière amovible et comprenant au moins une zone des passages (6).
